(19) Europäisches Patentamt

European Patent Office

Office européen des brevets

(11) **EP 1 666 915 A1**

(12) **EUROPEAN PATENT APPLICATION**
published in accordance with Art. 158(3) EPC

(43) Date of publication:
07.06.2006 Bulletin 2006/23

(51) Int Cl.:
*G01S 13/66* (1980.01)   *G01S 13/34* (1980.01)
*G01S 13/44* (1980.01)   *G01S 13/93* (1980.01)

(21) Application number: 03818661.5

(22) Date of filing: 11.09.2003

(86) International application number:
**PCT/JP2003/011647**

(87) International publication number:
**WO 2005/026770 (24.03.2005 Gazette 2005/12)**

(84) Designated Contracting States:
DE

(71) Applicant: **MITSUBISHI DENKI KABUSHIKI KAISHA**
Chiyoda-ku
Tokyo 100-8310 (JP)

(72) Inventors:
• **KIBAYASHI, Noriko**
Chiyoda-ku,
Tokyo 100-8310 (JP)

• **ITO, Masayoshi**
Chiyoda-ku,
Tokyo 100-8310 (JP)

(74) Representative: **Pfenning, Meinig & Partner GbR
Patent- und Rechtsanwälte
Theresienhöhe 13
80339 München (DE)**

(54) **RADAR DEVICE**

(57)    A radar device tracks with a high accuracy positions and velocities of a plurality of external targets that are close to each other and whose observed direction values are likely to be low. The radar device includes a target tracking filter for calculating relative distances and relative velocities of a plurality of external targets by signal-processing received signals from an antenna, for calculating, the directions of the plurality of external targets by combining, among beam patterns radiated by the antenna, adjacent beam patterns that partially overlap, and for obtaining, from the directions and the relative distances and velocities, observed position values and observed velocity values of the plurality of external targets, to calculate, from the observed position values and the observed velocity values, smoothed values of the position and velocity for each of the external targets; and an intra-tracking-processing-cluster target tracking filter for forming a cluster from the plurality of external targets that are close to each other, for creating gates for the external targets in the cluster, different from those in the target tracking filter, and for performing a correlation process on the observed values of the external targets based on the gates.

FIG. 3

**Description**

TECHNICAL FIELD

The present invention relates to radar devices, and to a technology for, particularly when targets; to be tracked are close to each other, accurately tracking the targets.

BACKGROUND ART

A sequential-lobing system and a monopulse system are known, as technologies for observing the direction of a target by combining a plurality of beam patterns. These are methods of estimating the direction of a target by calculating the difference in target images in adjacent beam patterns. In addition, using a pulse Doppler radar system or an FMCW radar, system, the relative distance to the target and the relative, velocity of the target can be obtained. Therefore, by combining these systems (for instance, the sequential-lobing system and the FMCW radar system), the position and the velocity of the target with, respect to the ground surface can be calculated.

However, these methods assume that a single target is present. The conventional methods cannot deal with a case in which more than one targets are present. As a method for resolving such a problem, there is a method in which, between a plurality of channels, a combination of peaks in which the frequencies of received waves correspond to each other is obtained, the bearings of a plurality of targets are detected based on the phase difference in the peaks of the combination, and by combining the bearings with the distance and the velocity, the positions of the targets are obtained (for example, Japanese Patent Laid-Open No. 271430/1999 "CAR RADAR DEVICE").

According to the method, if a plurality of targets can be separated off by different beams, highly reliable bearings can be detected. However, in an actual radar-use environment, when an in vehicle radar is used, for example, cases often occur in which other vehicles approach each other so that more than one targets are included in the same beam. If such a situation occurs, the' conventional method cannot correctly, observe the directions. Therefore, the method sometimes fails in separation of trails of a plurality of targets (a plurality of targets are observed to be exactly on the same point), or a false image, is generated so that a result is sometimes obtained in which some sort of target is present, in the, position where originally nothing is present. The present invention aims to resolve such problems described above.

**DISCLOSURE OF THE INVENTION**

A radar device relevant to the present invention includes: an antenna for receiving as reception waves radio waves coming from a plurality of external targets; a signal detector for converting the reception waves received by the antenna into received signals to extract, quantities characterizing the received signals; and a position/velocity computing unit for calculating, from the received-signal characterizing quantities extracted by the signal detector, observed position values, and observed velocity values of each of the external targets; and further , includes: a target tracking filter for performing a correlation process, based on first gates, on the observed position values and the observed velocity values calculated by the position/velocity computing unit, to calculate, from the observed position values and the observed velocity values that satisfy the first gates, smoothed values of the positions and velocities of each of the, external targets; a clustering unit for when external targets are close to each other, creating a cluster to include the external targets, based on the smoothed values of the positions of each of the external targets; and an intra-cluster target tracking filter for performing a correlation process, based on second gates, on the observed position values and the observed velocity values of the external targets belonging to the cluster formed by the clustering unit, to calculate, from the observed position values and the observed velocity values that satisfy the second gates, smoothed values of the positions and velocities of each of the external targets.

Therefore, the correlation process can be performed by setting different gates for the targets that are close to each other, and for the targets that are not close. If the observed direction values are not reliable because the targets are close to each other, the predicted values by the tracking filter are heavily weighed to reduce effects of noise, and meanwhile, if the observed values are reliable, the observed values can be heavily weighed, so that, when a plurality of targets are arbitrarily positioned with respect to the beam patterns, highly-accurate measurement results can be obtained.

Another radar device relevant to the present invention includes: an antenna for receiving as reception waves radio waves coming from a plurality of external targets; a signal detector for converting the reception waves received by the antenna into received signals' to extract, quantities characterizing the received signals; and a position/velocity computing unit for calculating, from the received-signal characterizing quantities extracted by the signal detector, observed position values and observed velocity values of each of the external targets; and further includes: a target tracking filter for performing a correlation process, based on first gates, on the observed position values and the observed velocity values calculated by the position/velocity computing unit, to calculate, from the observed position values and the observed velocity values that satisfy the first gates, smoothed values of the positions and velocities of each of the external targets; a clustering unit for, when external targets are close to each other, creating a cluster to include the external targets; based' on the smoothed, values of the positions of each of the external targets; and an intra-cluster target tracking filter for, while regarding the cluster formed, by the clustering unit as a single external target, calculating, from the observed position values and the observed velocity values calculated, by the position/velocity computing unit, smoothed values of the, position and the velocity of the cluster.

Therefore, the radar device has an effect that stable' tracking with high accuracy is made possible, even in a situation in which, in particular, a plurality of external targets are close to each other, and are driving in parallel at a constant velocity, so that highly-accurate observed values are not easily-obtainable.

## BRIEF DESCRIPTION OF DRAWINGS

Fig. 1 is a diagram illustrating a situation in which a radar device according to Embodiment 1 and Embodiment 2 of the present invention is used;

Fig. 2 is a block diagram illustrating the configuration of the radar device according to Embodiment 1 and Embodiment 2 of the, present invention;

Fig. 3 is a block diagram illustrating the detailed configuration of a signal processor in the radar device according to Embodiment 1 of the present invention;

Fig. 4 is a diagram illustrating relations among targets and bearn patterns of the radar device according to Embodiment 1 of the present invention;

Fig. 5 is a flowchart illustrating signal processing in the radar device in Embodiment 1 of the present invention;

Fig. 6 is a flowchart illustrating tracking processing in the radar device in Embodiment 1 of the present invention;

Fig. 7 is a flowchart illustrating clustering processing in the radar device in Embodiment 1 of the present invention;

Fig. 8 is a diagram illustrating relations between gates for targets in the radar device according to Embodiment 1 of the present invention;

Fig. 9 is a block diagram illustrating a configuration example of gates for the targets in a cluster in the radar device according to Embodiment 1 of the present invention;

Fig. 10 is a block diagram illustrating another configuration example of gates for the targets in a cluster in the radar device according to Embodiment of the present invention;

Fig.11 is a diagram illustrating the detailed configuration of a signal processor in the radar device according to Embodiment 2 of the present invention;

Fig. 12 is a diagram illustrating positional relations among targets. in the radar device according to Embodiment 2 of the present invention;

Fig. 13 is a flowchart illustrating signal processing in the radar device in Embodiment 2 of the present invention; and

Fig. 14 is a flowchart illustrating tracking processing in the radar device in Embodiment 2 of the present invention.

## BEST MODE FOR CARRYING OUT THE INVENTION

Embodiment 1.

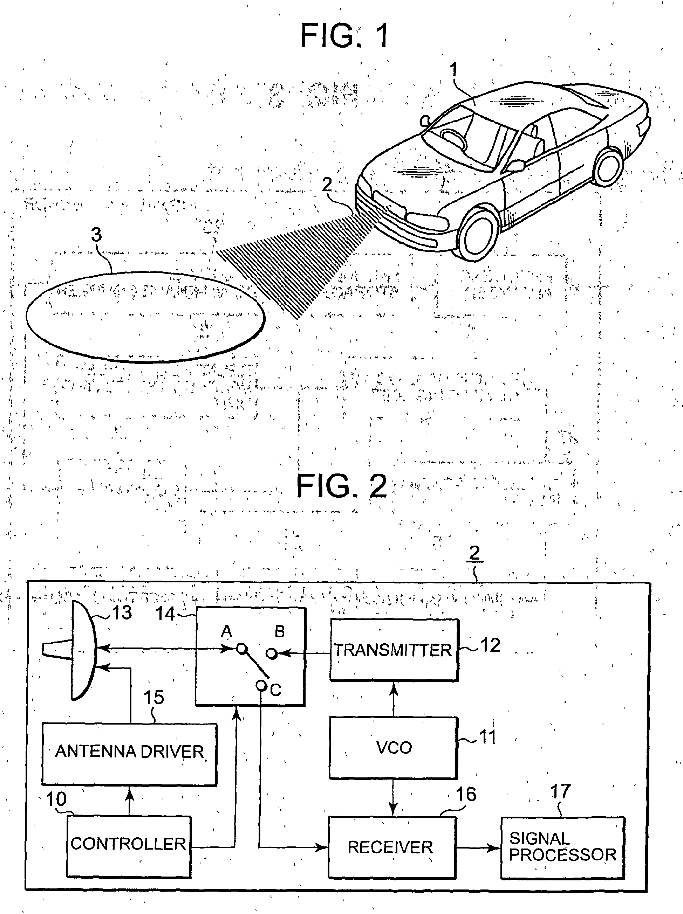

Fig. 1 illustrates a car, equipped with a radar device, according to Embodiment 1 of the present invention. In the figure, the radar device 2 according to Embodiment 1 of the present invention is installed in the front of the car 1. The radar device 2 radiates, a beam forward from the car 1. A portion of the radiated beam is reflected, by an object 3 that is located in front of the car 1, and comes back to the radar device 2. The radar device 2 receives the reflected beam, and performs signal processing, to detect the distance to the object 3, and the velocity and the direction of the object 3. According to the above-obtained information on the object 3, the car 1 performs control such as automatic braking for avoiding a collision, and adjusting seat belts in preparation for a collision. Consequently, it largely contributes to dramatically enhance safety of the car 1.

Fig. 1 is a block diagram illustrating the configuration of the radar device 2. The radar device 2 is a radar device constituted by an FMCW (frequency modulation continuous wave) radar system. In the figure, a controller 10 is a component for sending control signals to each component of the radar device, to perform timing control for the entire device. In addition, it is assumed that the controller 10 is composed of a component such as a general-purpose central processing unit (CPU) and a DSP (digital signal processor), and is connected to each component via buses not illustrated in the figure. Moreover, hereinafter, a "component" indicates a dedicated circuit or element prepared for realizing the function thereof. However, depending on the case, the device may be configured so that equivalent functions are performed by a computer program being executed by a computer having a central processing unit (CPU).

A VCO 11 is a voltage controlled oscillator, which is a component for generating weak alternate signals. The VCO 11 generates alternate signals that repeats at a certain period of time an up phase for continuously, increasing the frequency, and a down phase for continuously decreasing the frequency.

A transmitter 12 is an amplifier for amplifying the weak signal generated by the VCO 11. An antenna 13 is a sensing element for radiating toward the object 3 as a transmission wave an output signal from the VCO 11 amplified by the transmitter 12, and for receiving as a reception wave a portion of the transmission wave reflected by the object 3. A transmission/reception switcher 14 has a movable terminal A, a contact, B, and a contact C. According to this configuration, the antenna 13 is switched between a state of sending a transmission wave, and a state of receiving a reception wave. The movable terminal A is connected to either the contacts B or the contact C by a control signal from the controller 10. When the movable terminal A is connected to the contact B, the transmitter 12 and the antenna 13 are directly connected, so that the antenna 13 sends a transmission wave. When the movable terminal A is connected to the contact C, the antenna 13 and a later-described component 16 are directly connected, so that the antenna 13 receives a reception wave.

An antenna driver 15 is a component for controlling the direction of the antenna 13 mechanically or electronically. The, direction of the antenna 13 is controlled by the antenna driver 15. As a consequence, beams in which portions of beam patterns overlap each other are radiated.

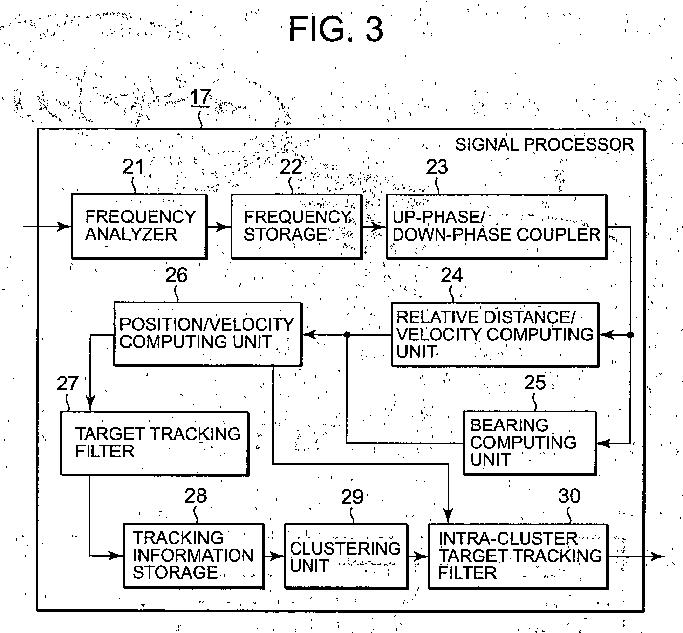

A receiver 16 is a component for generating a beat signal composed of the reception wave received by the antenna 13 and a reference signal generated by the VCO 11, and further for A/D converting the beat signal to output the converted signal. A signal processor 17 is a component for performing signal processing on the beat signal outputted by the receiver 16. The detailed configuration thereof is illustrated in a block diagram in Fig. 3.

In Fig. 3, a frequency analyzer 21 is a component for analyzing the frequency of the beat signal.

A frequency storage 22 is a storage element/circuit for storing the frequencies of the beat signals in both the up phase and the down phase. The beat signal frequency in the up phase and the beat signal frequency in the down phase are used in pairs for later calculations of relative distances and relative velocities. Therefore, the frequency storage 22 stores the frequencies of beat signals in both the phases for a certain period of time

An up-phase/down-phase coupler 23 is a component for, when beat signals of a plurality of targets are included in each of the up phase and the down phase, coupling for each target the up-phase beat signal frequency and the down-phase beat signal frequency.

A relative distance/velocity computing unit 24 is a component for calculating the relative distance/velocity for each target from the frequencies of the beat signals coupled by the up-phase/down-phase coupler 23.

A bearing computing unit 25 is a component for calculating a $\Delta/\Sigma$ value from the frequency of a beat signal, of a beam, and the frequency of a beat signal of another beam adjacent to the beam from which the beat signal is obtained, to calculate the bearing in which a target is present.,

A position/velocity computing unit 26 is a component for calculating for each target the position and the velocity with respect to the ground coordinates, from the relative distance/velocity for, each target, calculated by the relative distance/velocity computing unit 24, and from the bearing for each target, calculated by the bearing computing unit 25.

A target tracking filter 27 is a component for performing smoothing, processing on the position and the coordinates for each target, calculated by the position/velocity computing unit 26. The position and, the coordinates for each target, caltulated by the position/velocity computing unit 26, are based on observed values, and might be largely deviated from the true values due to noise included in the observed values. However, the target tracking filter 27 performs smoothing processing, so that such a situation can be avoided.

A tracking information storage 28 is an element, a circuit, or a storage medium such as a hard disk or a CD-ROM drive, for storing, for a predetermined period smoothed values outputted by the target tracking filter 27.

A clustering unit 29 is a component for, when targets get close to each other, forming a cluster from the targets.

An ultra-cluster target tracking filter 30 is a component for performing smoothing processing on the cluster formed by the clustering unit 29.

Next, the operations of the radar device 2 will be described. Firstly, a method of observing relative distances, relative velocities, and directions of external targets using the radar device 2 will be briefly described. As a radar system for observing distances and velocities, for example, a pulse Doppler radar system, and an FMCW (frequency modulation continuous wave) system adopted in the radar device 2 are known. In a pulse Doppler radar, pulse waves of the same frequency are periodically radiated from an antenna, and the delay time from reflection of the pulse wave on a target to arrival at the antenna is calculated. From the delay time, the relative distance to the target is calculated. In addition, when the target is moving, a frequency shift due to the Doppler effect arises on reflection of the pulse waves. Therefore, by obtaining the frequency shift, the relative velocity of the target is calculated.

Meanwhile, an FMCW radar adopted in the radar device 2 periodically repeats an up phase, for continuously increasing the frequency of the reference signal and a down phase for continuously, decreasing the frequency, and radiates toward the targets the transmission wave of the reference signal frequency. Then, by mixing the wave reflected by the target with the reference signal frequency at that time, a beat signal is generated. And, from the frequency and the phase of the beat signal in the up phase and the frequency and the phase of the beat signal in the down phase, the relative velocity and the relative distance; of the target are calculated: Given that the frequency of the beat signal in the up phase is U, the frequency of the beat signal in the down phase is D, a frequency sweep, width is B, a modulation time is T, the light velocity is c, and the wavelength of the transmission wave is λ, it is known that the relative distance R and the relative velocity V of the target are given, by equations (1) and (2).

$$R = \frac{cT}{4B}(D-U) \qquad (1)$$

$$V = \frac{\lambda}{4}(D+U) \qquad (2)$$

It is obvious from the equation (1) and the equation (2) that, in the FMCW radar, in order to calculate the relative, distance and the relative velocity, both U and D need to be determined. However, when a plurality of external targets are present, in each of the up phase and the down phase, a plurality of beat signal frequencies are calculated. Accordingly, in order to correctly calculate the relative distance and the relative, velocity, it is necessary to determine appropriate combinations of U and D from a plurality of beat frequencies in the up phase and a plurality, off beat frequencies in the down phases. Several technologies for resolving such problems are already known, and disclosed, fort example, in Japanese Patent. Laid-Open No.142337/1993 "Millimeter-wave radar distance/velocity measurement device".

Moreover, as a method of calculating the direction of a target, the following method is known, for example More specifically, beams are radiated in a plurality of directions so that portions of beam patterns overlap, and each wave reflected by a target is received for each beam. The ratio (Δ/Σ value) of the difference (Δ value) between adjacent beams and the sum (E value) of the adjacent beams in amplitude, phase, and the like of the received signals is calculated, and the incident direction of the reflected wave is calculated from the Δ/Σ value. This method can be used for an FMCW radar; a pulse Doppler radar, and radar devices using other systems.

As a method of combining adjacent beam patterns, the sequential-lobing system for calculating the Δ/Σ value between beam patterns radiated in, different periods of time, and the monopulse system for calculating the Δ/Σ value by simultaneously radiating a plurality of beam patterns from a plurality of array elements provided, and combining the beam patterns of the identical time are known. However, these systems assume that only a single target is present within a single beam pattern, and the systems cannot deal with cases in which targets come close to each other and consequently a plurality of targets is present within a single beam pattern.

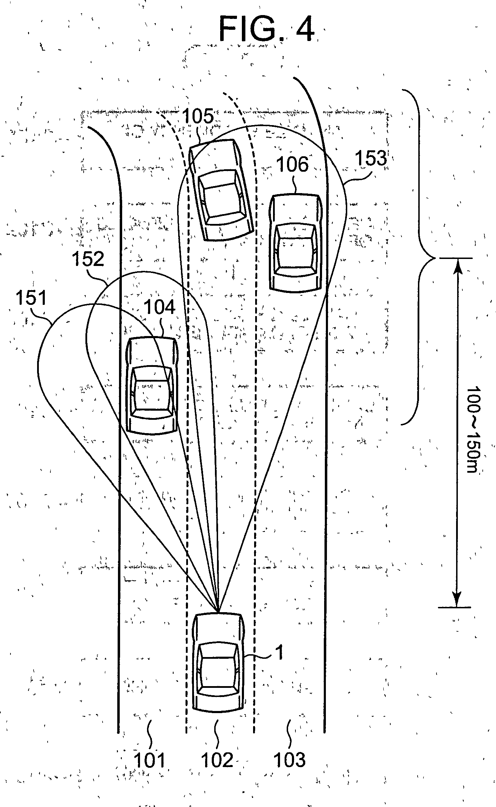

Next, based on the above-described principle of operation, the operations of the radar device 2 will be specifically described together with, the operations of the components of the radar device 2. In addition, in the following explanation, in order to describe the operations of the radar device 2 more specifically, it is assumed that movements of a plurality of cars driving ahead of the car 1 are measured. Fig. 4 is a diagram illustrating such a situation. A plurality of lanes such as opposing lanes is usually present in an actual road. Therefore, the radar device 2 radiates beams toward a plurality of vehicles across different lanes, and a reflected wave returns from each of the objects. In order to explain the operation in such a case, there are three lanes consisting of lanes 101, 102, and 103 in the example of Fig. 4. It is assumed that a vehicle 104 in the lane 101, a vehicle 105 in the lane 102, and a vehicle 106 in the lane 103 are co-directionally driving around 100 to 150 m ahead of the car 1.

Firstly, in the radar device 2, reference signals generated by the VCO 11, composed of the up phase and the down phase, are amplified by the transmitter 12, and then radiated from the antenna 13 toward the vehicles 104, 105, and 106. Here, the antenna 13 is configured so that the radiation direction of the beam is controlled by the antenna driver 15, and the beam is transmitted by the controller 10 Consequently, the antenna 13 sequentially radiates a beam 151, a beam 152, a beam 153, and the like as illustrated in Fig. 4, and captures the vehicles 104, 105, and 106 within the beam patterns.

As already described in the explanation of the method of calculating the direction in which a target is present by calculating a Δ/Σ value, in order to correctly obtaining the directions of the targets, it is assumed that a single target is present within each beam. Howevers in the case of an in vehicle radar, in order to satisfy constraint of installing in a car, the size of a mountable antenna is limited. Accordingly, the beam width; cannot be very narrow. Given that the lane width is around 4.5 m, try to calculate resolution θ required for capturing within separate beams the vehicles driving in parallel around 100 to 150 m ahead. If the distance to the vehicles is supposedly 100 m, θ must satisfy the following equation.

$$\tan \theta \leq 4.5/100 = 0.045 \quad (3)$$

If $\theta$ is small enough, $\tan \theta$ can be approximated by $\theta$; so that $\theta$ is, 0.045 at most. If the unit is converted from radian to degree, $\theta$ [deg]= 0.045 x 180 / $\pi \cong 2.58°$. It is generally difficult that such an extremely narrow beam width is realized in an in-vehicle radar.

Consequently, a situation in which a plurality of targets is included within the same beam often occurs in an actual use environment. However, if such a situation occurs, the directions and the positions of the targets cannot be correctly captured. As described above, the problem that the target positions cannot be appropriately separated directly affects usability of primary application systems using an in vehicle radar system. More specifically, in a case in which a driver uses on an express way a system for detecting states of other vehicles by an in vehicle radar to perform cruise control or automatic braking, when a vehicle driving 100 m ahead on the same lane as the driver suddenly brakes, some sort of response is required for the driver's own car. However, if an antenna having an appropriate resolution is not installed, when a vehicle driving on an adjacent lane suddenly brakes, the same response as the case of driving on the same lane might be potentially performed.

In the example of Fig. 4, the vehicle 104 is driving around an overlap of the beam patterns of the beams 151 and 152 that neighbor each other. Meanwhile, the vehicles 105 and 106 are both driving within the beam pattern of the beam 153. Such a situation actually occurs very often.

The beams such as the beam 151, the beam 152, and the beam 153 radiated by the antenna 13 are reflected by the vehicles, 104, through 106, and return to the antenna 13 again. The antenna 13 sequentially receives the reflected waves, and outputs, the reception waves to the receiver 16. The receiver 16 mixes the reference signal in the VCO 11 with the received wave; to generate a beat signal. Here, the VCO 11 continuously increases or decreases the frequency, and a certain period of time elapses while the transmission wave reaches, an external target, is reflected there, and returns to the antenna 13, so that the frequency of the reference signal is different from the frequency, at the time when the reception wave was radiated as a transmission wave. In addition, because the external target is - moving when the reception wave was reflected by the external target, the Doppler effect arises, and consequently the frequency of the reception wave has been shifted. Therefore, the beat signal generated in the receiver 16 includes information such as the elapsed time while the transmission wave is radiated and returns as a reception wave, and the moving velocity of the external target. These will be extracted according to frequency analysis later.

Moreover, the receiver 16 A/D converts the beat signal so as to be processable in the following signal processing, to output the received signal as a digital signal to the signal processor 17.

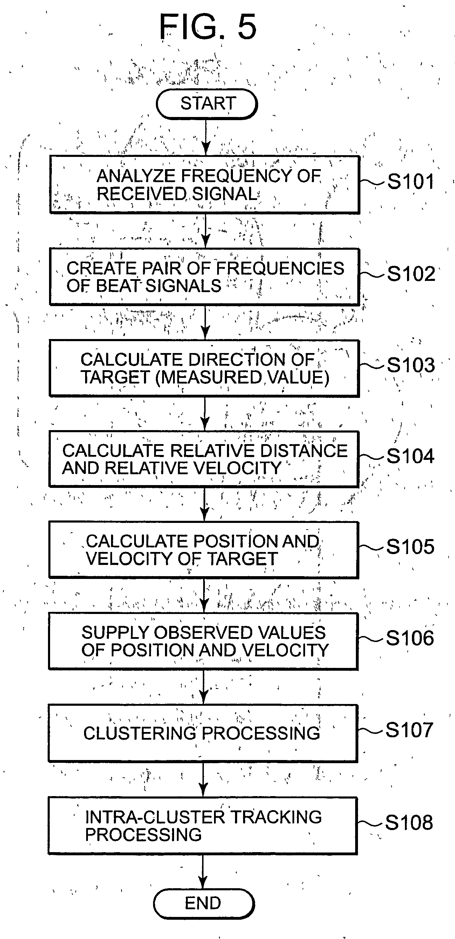

Next, the operations of the signal processor 17 will be described. Fig. 5 is a flowchart illustrating the operations of the signal processor 17. In step S101 in the figure, the frequency analyzer 21 makes a spectral analysis by performing, for example, the fast Fourier transformation on the received signal, to extract frequency components. In addition, the frequency analyzer 21 outputs together with the frequency components the amplitude of the received signal at which the frequency spectrum peaks. Next, the beat signal frequency components and the amplitude of the received signal are stored in the frequency storage 22 for a certain period, or for a period until at least a single up-phase interval and a single down-phase interval have elapsed. Then in step S102, when a pair of the up phase and the down phase elapses, the controller 10 sends a control signal to the up-phase/down-phase coupler 23 to activate the up-phase/down-phase coupler 23. Consequently, when an interval consisting of a pair of the up phase and the, down phase elapses, the up-phase/down-phase coupler 23 creates a pair of an up-phase beat signal and a down-phase beat signal, stored in the frequency storage 22.

Next, in step S103, the bearing computing unit 25 reads from the frequency storage 22 the amplitude of the received signal and the pair of the beat signal in the up phase and the beat signal in- the down phase, created by the up-phase/down-phase coupler 23, and obtains the difference ($\Delta$ value) between adjacent beams and the sum ($\Sigma$ value) of the adjacent beams in amplitude of the received signals, to calculate the ratio ($\Delta/\Sigma$ value). Then the bearing computing unit 25 calculates from the $\Delta/\Sigma$ value the direction of the targets. The calculation is performed as follows. Specifically, in the received signals for a couple of adjacent beams, an error voltage $\varepsilon$ caused by the direction of the target is expressed by the difference ($\Delta$) of the amplitudes, divided by the sum ($\Sigma$) of the amplitudes, of the received signals for both the beams. In other words, the relation $\varepsilon = \Delta/\Sigma$ is satisfied. Given that the direction of the antenna 13 is $\theta_a$, the direction of the target $\theta_o$ is given as follows.

$$\theta_o = \theta_a + \varepsilon \quad (4)$$

6

The bearing computing unit 25 calculates $\theta_o$ from the $\Delta/\Sigma$ value according to the equation (4).

Subsequently to the processing of the bearing computing unit 25, or in parallel with the operations of the bearing computing unit, 25, in step S104, the relative distance/velocity computing unit 24 obtains using the equation (1) and the, equation (2) the relative velocity and the, relative distance of the external target (vehicle 104, 105; 106, or the like) from the frequency U of the up-phase beat signal and the frequency D of the down-phase beat signal; stored in the frequency storage 22. Then in step S105, the position/velocity computing unit 26 calculates, from the bearing calculated by the bearing computing unit 25 and from the relative velocity and the relative distance calculated by the relative distance/ velocity computing unit 24, the position and the velocity of the target in the ground coordinate system.

(Tracking processings for each external target).

Next, in step S106, the observed values are supplied to tracking filtering executed by the target tracking filter 27. The target tracking filter 27 performs a loop operation for calculating smoothed values from the observed values at a predetermined interval of time. The tracking filtering executed by the target tracking filter 27 will be described below.

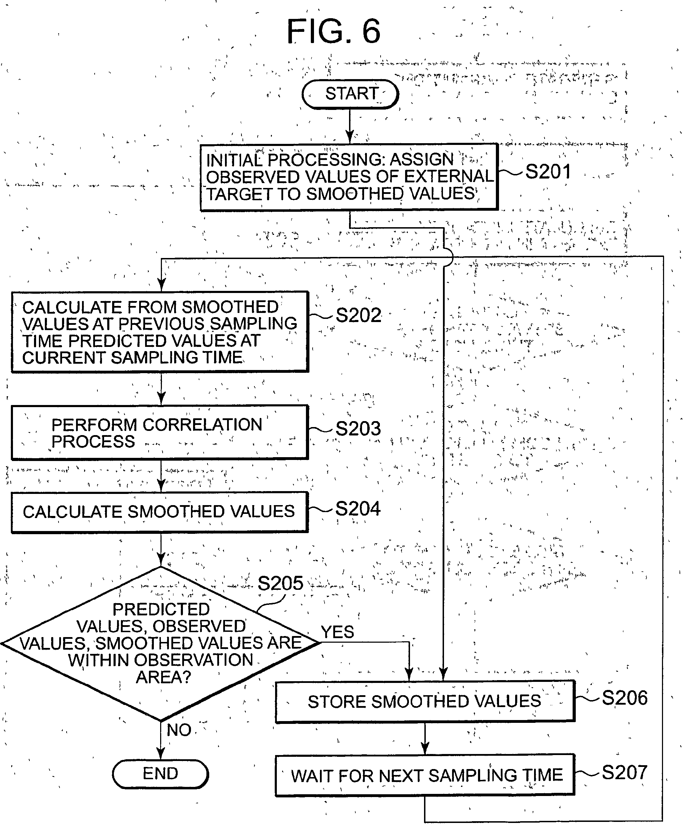

Fig. 6 is a flowchart illustrating the tracking filtering executed by the target tracking filter 27. Here, the tracking processing illustrated in the present flowchart handles only a single external target. In a case in which a plurality of external targets is present, the tracking processing is separately performed for each external target. Firstly, prior to the tracking processing, whether the observed values supplied in step S106 are from any of existing external targets that is currently tracking-processed is judged. If the observed values are not from any of the external targets, it is determined that a new external target is observed, so that new tracking processing is started.

(Initial processing)

Firstly, in step S201, as initial processing for the tracking processing, the observed values supplied in step S108 are assigned to the smoothed values. Then, step S206 for steady processing ensues. Subsequently, step S207 ensues to wait for arrival of the next sampling time. On the arrival, step S202 ensues. The processings, in step S202, S 206 and S 207 will be described later.

(Steady processing)

In step S202, based on the smoothed values at the previous sampling, predicted values at the current sampling are calculated. Given that a k-th sampling is the current sampling, a smoothed x component value is $x_s(k)$, a smoothed y component value is $y_p(k)$, a smoothed velocity component value is $v_s(k)$, and an elapsed time from the previous sampling time ((k-1)-th sampling) is T, and assuming that an $\alpha$ filter is applied to the X component, and an $\alpha$-$\beta$, filter is applied to the y component, a predicted x component value $x_p(k)$, a predicted y component value $y_p(k)$, and a predicted velocity, component, value $v_p(k)$ are given by, for example, the following equations.

$$x_p(k) = x_s(k\text{-}1) \qquad (5)$$

$$y_p(k) = y_s(k\text{-}1) + v_s(k\text{-}1)\cdot T \qquad (6)$$

$$v_p(k) = v_s(k\text{-}1) \qquad (7)$$

Subsequently, in step S203, new observed values are supplied by the position/velocity computing unit, 26 in step S106. Here, because observed values obtained via a radar device are generally likely to get noisy, it is rare that observed values themselves are adopted as input data. Therefore, instead of raw observed values, smoothed values, which are less affected by the noise, are calculated and supplied to other systems utilizing data from the radar device, which is a purpose of the filtering. Because the filtering has such a purpose, it often occurs that the observed values obtained are not unconditionally adopted, and that whether or not the observed values are adopted is determined after conditional determination called a correlation process. Such a conditional determination operation is the correlation process.

The condition of determining whether the current observed values are accepted is called a gate, which is often determined dynamically based on smoothed values and predicted values at the previous sampling time, an elapsed time from the previous sampling time, and the like.

In the radar device 2, in a case in which a plurality of vehicles is observed, if the gates for the vehicles overlap, competition for the observed values among the gates occurs, so that the observed values might be obtained by other tracking processing instead, of the original trackings processing. Therefore, in order to avoid such a situation, it is required that the gates for the external targets do not overlap.

However, by doing as above, situation sometimes occurs, in which the gates become narrower than required, and observed values that must be supposedly picked up by the tracking process are discarded. For this purpose, in the radar device 2, in a case in which the external targets get close to each other, and the gates overlap, so that the correlation process cannot be correctly performed, the situation is dealt with by forming clusters while performing the tracking processing for each external target. This will be described later.

Here, as a first step, if observed values $x_o(k)$, $y_o(k)$, and $v_o(k)$ satisfy the following equations, the observed values are adopted.

$$|x_s(k-1) - x_o(k)| < dx \qquad (8)$$

$$|y_p(k) - y_o(k)| < dy \qquad (9)$$

$$|v_s(k-1) - v_o(k)| < dv \qquad (10)$$

Moreover, for vehicles that have not been correlated in, the first step the gates are further widen, and if the following equations are satisfied, the observed values are adopted.

$$|x_s(k-1) - x_o(k)| < dx' \qquad (11)$$

$$|y_p(k) - y_o(k)| < dy' \qquad (12)$$

$$|v_s(k-1) - v_o(k)| < dv' \qquad (13)$$

In addition, in the equation (8) through the equation (13); dx, dy, dv, dx',dy', and dv' are constants, and satisfy the relations dx' = dx, +Δdx, dy'= dy+ Δdy, and dv' = dv+Δdv (Δdx, Δdy, and Δdv are positive constant, values).

Next, in step S204, the smoothed values are calculated from the predicted values at the current sampling time and the observed values obtained by the correlation process. Here, a coefficient for determining how the observed value affects the calculation of the smoothed value is called a gain. Specifically, given that the gain of the x component is $\alpha_x$, and the gain of the component is αy, for example, the smoothed value of the x component, $x_s(k)$, the smoothed value of the y, component, $y_p(k)$, and the smoothed value of the velocity component, $v_s(k)$, are calculated as follows.

$$x_s = x_p(k) + \alpha_x [x_o(k) - x_p(k)] \qquad (14)$$

$$y_s = y_p(k) + \alpha_y [y_o(k) - y_p(k)] \qquad (15)$$

$$v_s(k) = v_o(k) \qquad\qquad (16)$$

The size of the gain determines how largely the noise affects the smoothed values. If the gain is made smaller, contribution of the observed values on the smoothed values is reduced, so that the smoothed values are not affected by the noise. However, the smoothed values become divergent from the observed values, which are actual values. Consequently, there is a problem in that, when the external target moves unexpectedly, the smoothed values cannot follow the movement.

In the meanwhile, if the gain is made larger, followability of the smoothed values with respect to the movement of the external target is enhanced. In a measurement environment in which the S/N ratio is high, the larger the value of the gain, the higher the accuracy of the smoothed value becomes. In case of the radar device 2, depending on relative positional relations among the external targets, it is necessary to determine the size of the gains. In particular, when the gates overlap so that the observed values are not reliable any more, the movement cannot be followed any more only by adjusting the gain size.

Next, in step S205, whether all of the predicted values, the observed values, and the smoothed values are within the observation area is judged. If all of these are within the observation, area, the tracking processing can be continued, so that step S206 ensues (step S205: Yes). Meanwhile, if any of the predicted values, the observed, values, or the smoothed values deviates from the observation area, the tracking processing cannot be continued, so that the tracking processing is terminated (step S205: No).

In step S206, the smoothed values calculated in step S204 are stored in the tracking information storage 28. These values are stored in units of the external target until the next sampling time. Subsequently, in step S207, the arrival of the next sampling time is awaited. On the arrival, the processing for the next sampling is started from step S202. The above-described is the tracking processing in the target tracking filter 27.

Next, in step S107, the clustering unit 29 reads out tracking results stored in the tracking information storage 28. Then, the targets whose predicted values, smoothed values, and the like, of motion specifications such as the position and the velocity satisfy predetermined conditions are extracted from the external targets (vehicles 104, 105, 106, and the like). A cluster is formed from the external targets satisfying the predetermined conditions. Details of the clustering processing will be described below.

(Clustering processing)

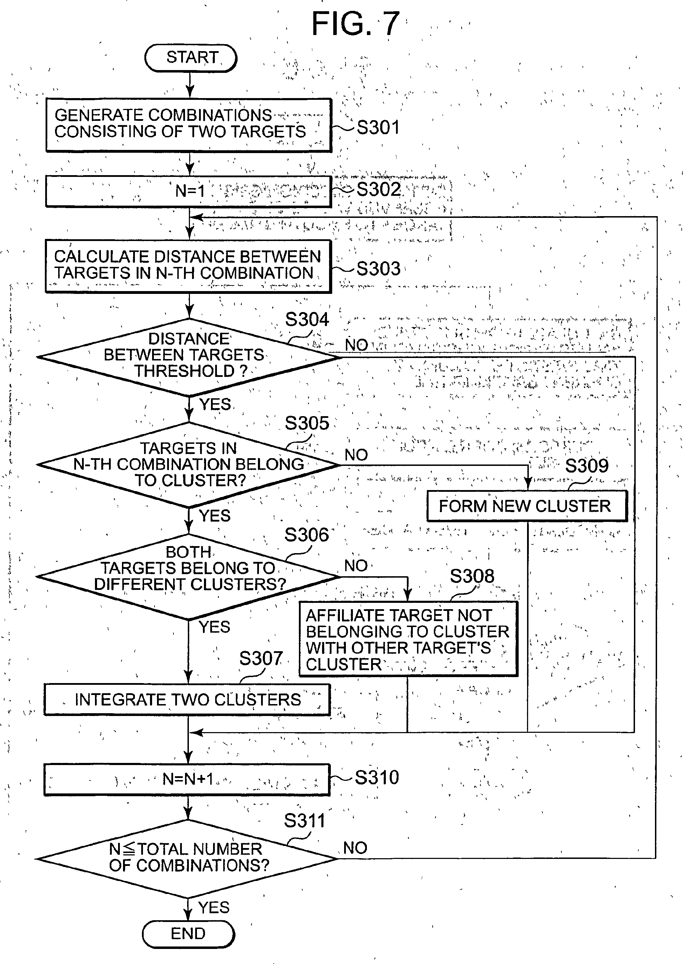

Fig. 7 is a flowchart of the clustering processing performed by the clustering unit 29. In step S301 in the figure, the clustering unit 29 generates from the external targets all possible combinations' each consisting of two external targets. The combinations generated here are sequentially numbered: The combinations are managed in the storage area so that a combination is uniquely identified by the number, for example, as an N-th combination. Next, in step S302, the variable N is initialized to 1. The variable N is a counter variable used for indicating a combination consisting of external targets.

In step S303, the distance between the external targets in the N-th combination is calculated. As a distance value, a Euclidean distance, for example, is used here. However, a city block distance or a Mahalanobis distance can be used instead.

In step S304, whether the distance between the external targets in the N-th combination is not larger than a predetermined thereshold is judged. If the distance between the external, targets is not larger than the predetermined threshold, then both the external targets should belong to the same cluster. In this case, step S305 ensues (step SS04: Yes). The predetermined threshold can be a constant here. However, for example, given that TH is a constant, the target tracking filter 27 calculates predicted values of the distances between the targets, and, based on the variance $\sigma p_1$ (variance of an i-th target), of the predicted values of the distances between the targets, the threshold can be calculated using, for example, the equation (17).

$$TH(k) = TH \cdot \sum_{i=1}^{M} \sigma p_i \qquad (17)$$

In the equation above, k means that the threshold is a threshold for the k-th sampling time. In addition, M is the total number of the targets. If the variance of the predicted values of the target position is large it is, assumed that the direction observation accuracy is low, so that, even if the predicted distance value is large, it is conceivable that the targets are actually close to each other. Consequently, by determining the threshold according to the equation (17), even if the direction observation accuracy is low, the clustering can be appropriately performed.

Meanwhile, if the distance exceeds the predetermined threshold, step S310 ensues (step S304: No).The processing in this case will be described later.

In step S305, whether the external targets in the N-th combination already belong to any of the clusters is judged. If one of the external targets belongs to any of the clusters, the other external target must be assigned to the same cluster, so that the processing therefor is performed. In this case, step S306 ensues (step S305: Yes). In step S306, whether both the external targets belong to clusters, which are different from each other are further judged. If the clusters are different from each other, step S307 ensues (step 206), and the clusters are integrated into a single cluster in step S307. The reason is that external targets the distance value between which is within a predetermined value are not allowed to belong to different clusters. After that, step S310 ensues.

In the meanwhile, if'either, one of the external targets has not belonged to a cluster yet, or if both the external targets belong to the same cluster, step S308 ensues (step S306: No): In step S308, if one of the external targets does not belong to any of the clusters, the external target is assigned to the cluster that the other external target belongs to. After that, step S310 ensues.

Meanwhile, in step S305, if neither of the external, targets has belonged to any of the clusters yet, step S309 ensues (step, S305: No). In this case, in step S309, a new cluster is formed, and both the external targets are assigned to the new cluster. After that, step S310 ensues.

In step S310, the counter variable N is incremented by 1. Then in step S311, whether the N does not exceed the total number of the combinations of the external targets is judged. If the N does not exceed the total number of the combinations, step S303 recurs (step S311: Yes), to repeat the same processing for the next combination. Meanwhile, if the N exceeds the total number of the combinations, the clustering processing is terminated.

In addition, the clustering processing described above determines distribution of the external, targets based on the distance, and forms clusters. Other than that, based on a prediction error covariance, matrix expressing the variance of the predicted values of the external targets, the threshold can be adaptively varied.

Moreover, in the above a method of forming, clusters has been described, a assuming that, from a state in which not a single cluster is formed, all the external targets are assigned to any of the clusters. However, in a case in which clusters have already been formed according to' observed values or smoothed values in the past, using the existing clusters as a basis, the structure of the clusters can be varied for changed portions thereof.

Furthermore, for a cluster including only a single external target, the clustering is released. Because such an external target is apart enough from other external targets, it is believed that the reliability of the observed direction values calculated in step S103 is high.

Next, in step S108, the intra-cluster target tracking filter 30 performs intra-cluster tracking, processing for each cluster. In step S108, tracking processing results for the external, targets stored in the tracking information storage 28 are overwritten with intra trackings processing results; which are to be stored. By processing as above, the processing results by the cluster tracking filter, are adopted as tracking results for the external targets belonging to clusters, and the processing results, by, the tracking filter for a single target are adopted as tracking results for the external targets that do not belong to a cluster.

The processing in the inira-cluster tracking filter 30 differs in gate setting compared with the target tracking filter 27. Specifically, as described in the explanation for the correlation process in the target tracking filter 27 in step S203, the gate for a target belonging to a cluster is overlapped with the gates for other targets, so that trails of the targets cannot be separately handled.

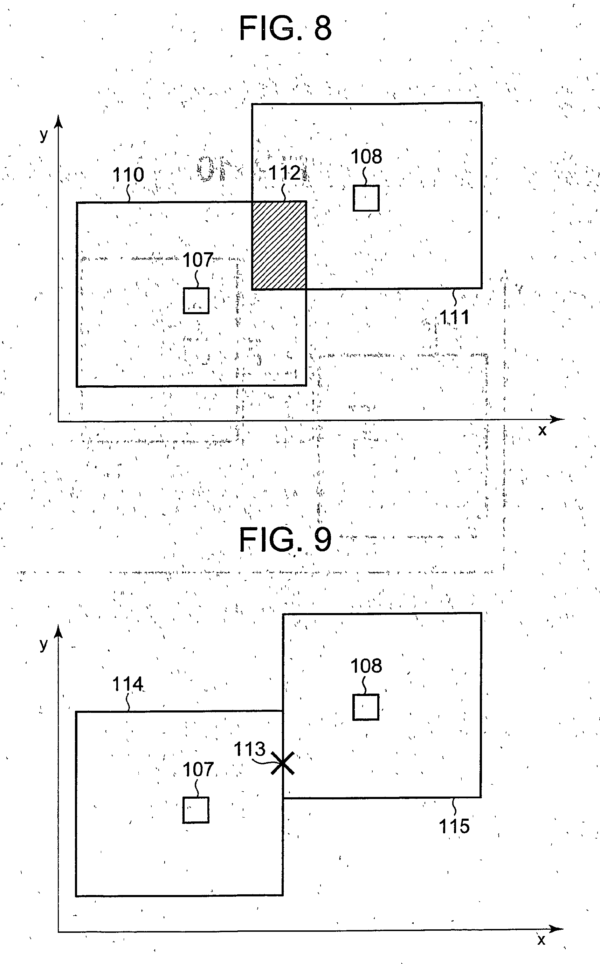

The gates used by the intra-cluster tracking filter 30 will be described next. Fig. 8 is a diagram illustrating that the gates for the two targets 107 and 108 that are present in a cluster (the gates used in each single-target tracking processing) are overlapped. A rectangle 110 (hereinafter, referred to, as a gate 110) represents a gate, area used in the single-target tracking processing for the target 107. Meanwhile, a rectangle 111 (hereinafter, referred to as a gate 111) represents a gate area used in the single-target tracking processing for the target 108. A rectangle 112 is an area where the rectangle 110 and the rectangle 111 overlap.

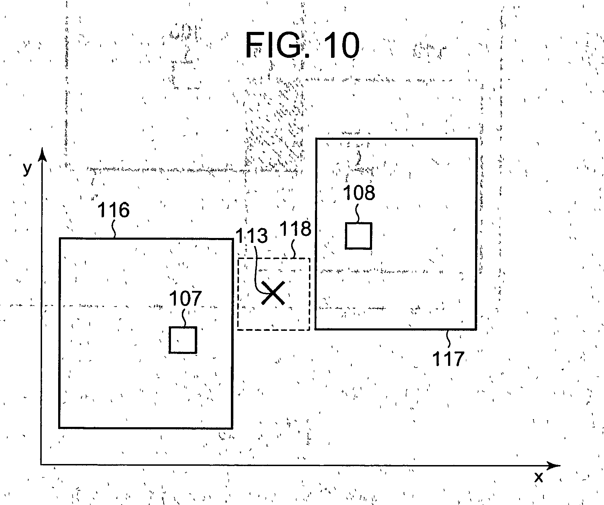

In a case in which some observed value is present in the rectangle 111, it cannot be judged whether the value should be correlated with the gate 110, pr correlated with the gate 111. Therefore, the intra-cluster tracking filter 30 creates new gates for the targets 107 and 108, illustrated in Fig. 9. In the figure, a point 113 is the midpoint of the targets 107 and 108. In addition, a rectangle 114 is an area expressing the gate for the target 107 (hereinafter, referred to as a gate 114); and a rectangle 115 is an area expressing the gate for the target 108 (hereinafter, referred to as a gate 115). As obviously senn from the figure, the area where the gate 110 and the gate 111 have overlapped is divided at the midpoint 113, where by the gate sizes of both the targets are adjusted, so that competition for an observed value is avoided.

Here, assumed that a smoothed value of the x component position of the target 107 at the k-th sampling is expressed as "$x_s, 107(k)$", and an observed value thereof is expressed as "$x_o,107(k)$", and a smoothed value of x component position of the target 108 at the k-th sampling is expressed as "$x_s$, 108(k)", and an observed value thereof is expressed as "$x_o$,108(k)"; the gate 110 for the target 107 has been given, by the following equation (equation (11)).

$$|x_s, 107(k-1) - x_o, 107(k)| < dx \qquad (18)$$

Therefore, the gate 110 has been expressed as follows.

$$x_s, 107(k-1) - dx < x_o, 107(k) < x_s, 107(k-1) + dx \qquad (19)$$

Meanwhile, for the target 108, the gate 111 has been expressed by the following equation (equation (12)).

$$x_s, 108(k-1) - dx < x_o, 108(k) < x_s, 108(k-1) + dx \qquad (20)$$

Here, given that "$x_o$,107(k) < $x_o$,108(k)", the gate is expressed as follows.

$$x_s, 107(k-1) - dx < x_o, 107(k) < (x_o, 107(k) + x_o, 108(k)) / 2 \qquad (21)$$

The gate 115 is expressed as follows.

$$(x_o, 107(k) + x_o, 108(k)) / 2 < x_o, 108(k) < x_s, 108(k-1) + dx \qquad (22)$$

In the above, because two targets are present, the gates are divided at the midpoint of the two. However, if three or more targets are present, each gate can be divided at the weighted center determined from the targets. In addition, hereinafter, assuming a polygon whose vertices are on the positions of the targets, the phrase "weighted center" means the point of the weighted center of the polygon.

Moreover, it is not necessary that the gates are divided at the midpoint or the weighted center. For example, as illustrated in Fig. 10, a certain buffer area can be provided around the midpoint or the weighted center so that the area is not included, in any of the gates. Such a configuration makes it possible that, in the bearing computing unit 25, the gates do not include a false image that sometimes arises around the midpoint of the targets due to the positional relations among the beam patterns and the targets.

It is obvious from the above description that, in the radar device in Embodiment 1 of the present invention, different gates are created for the targets that are close to each other, and for the targets that are not close, so that the corresponding tracking processing are performed. Consequently, while taking advantages of conventional, radar devices, the accuracy of measurements of the targets that are close to each other, which have been difficult to measure with the conventional radar device, can be enhanced.

In addition, in order to specifically explain Embodiment 1 of the present invention, the radar device 2 has been configured as an in vehicle radar, and in particular as an FMCW radar device. However, it is obvious that, for applications other than in vehicle radars, the present invention can be applied to cases in which, a plurality of targets is included in a beam patterns Moreover, in order to achieve the features, of the present invention, it is enough to use a radar system that can obtain distances, velocities, and directions. Therefore, the present invention can be applied to other radar systems such as a pulse Doppler radar device.

Embodiment 2.

In Embodiment 1, clusters are formed from targets that are, close to each other, and the filtering for the targets that belong to the clusters is differently designated from the filtering for targets that do not belong to any of the clusters. In addition, in cases in which targets to be observed are close to each other, and move in parallel at a constant velocity, the tracking processing can be performed while regarding a cluster as,a single target. A radar device according to Embodiment 2 of the present invention has such a feature.

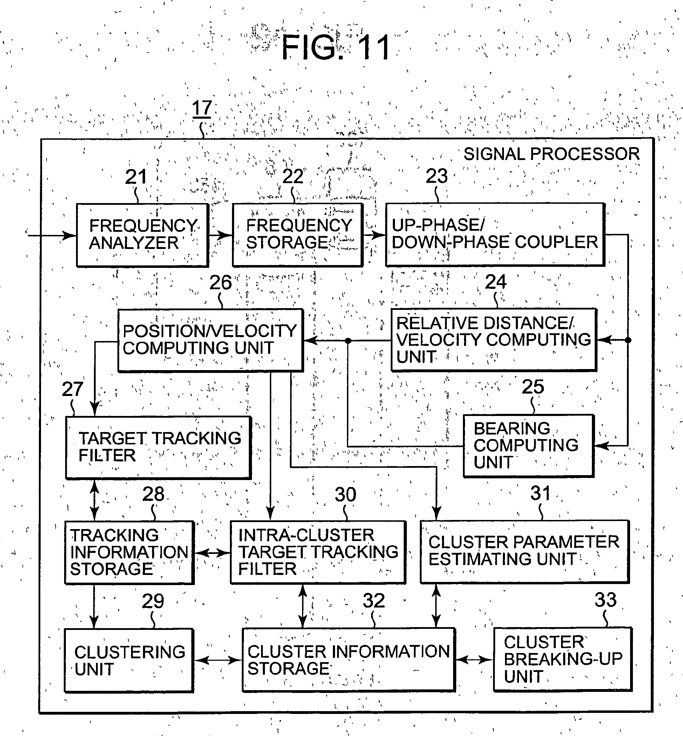

The entire structure of the radar device according to Embodiment 2 of the present invention is illustrated in the block diagrams in Fig. 1 and Fig. 2 as in Embodiment 1. Because the components with the same numerals as in Embodiment 1 are similar to the corresponding components, in Embodiment 1, the explanation will be omitted. In addition, the detailed configuration of a signal processor 17 is illustrated in a block diagram in Fig.11.

In Fig. 11, a cluster parameter estimating unit 31 is a component for, when a cluster can be regarded as a single moving target, estimating from the bearing computing unit 25 the motion specifications of the cluster A cluster information storage 32 is composed of a circuit, an element, or a device with storage media such as a hard disk drive unit, for, storing the motion specifications of the clustery calculated by the cluster parameter estimating unit 31. A cluster, breaking up unit 33 is a component for, when the targets do not satisfy the conditions for constituting the cluster, breaking up the cluster. Because other components having the same numerals as in Fig. 3 are similar to those in Embodiment 1, the description therefor will be omitted.

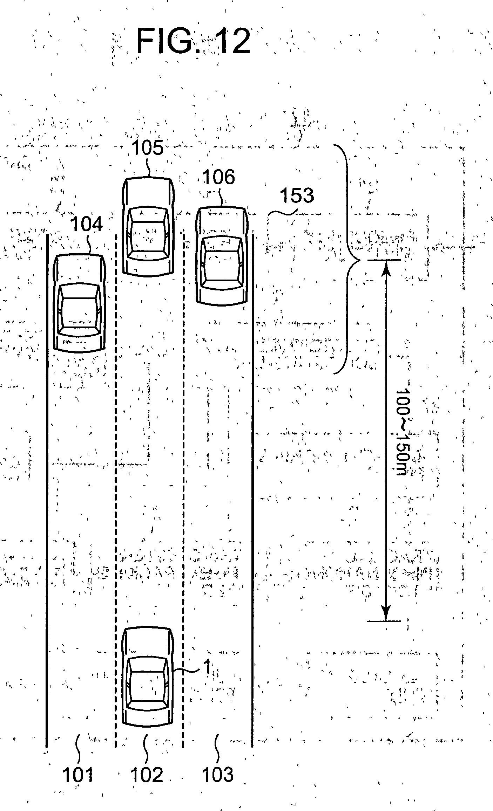

Next, the operations of the radar device according to Embodiment 2 of the present invention (the radar device 2 in Fig. 2) will be described. In the description below, in order to explain the operations of the radar device 2 more specifically, a situation is assumed in which the vehicles 104, 105, and 106 are driving ahead of the car 1 as illustrated in Fig. 12. It is assumed that the vehicles 104, 105, and 106 are moving along the respective lanes at an approximately constant velocity. Such a situation often occurs when driving along a freeway such as an expressway along which no intersections nor signals are present. Because, in Fig. 12, other components having the same numerals as in Fig. 4 are similar to those in Fig. 4, the description therefor will be omitted.

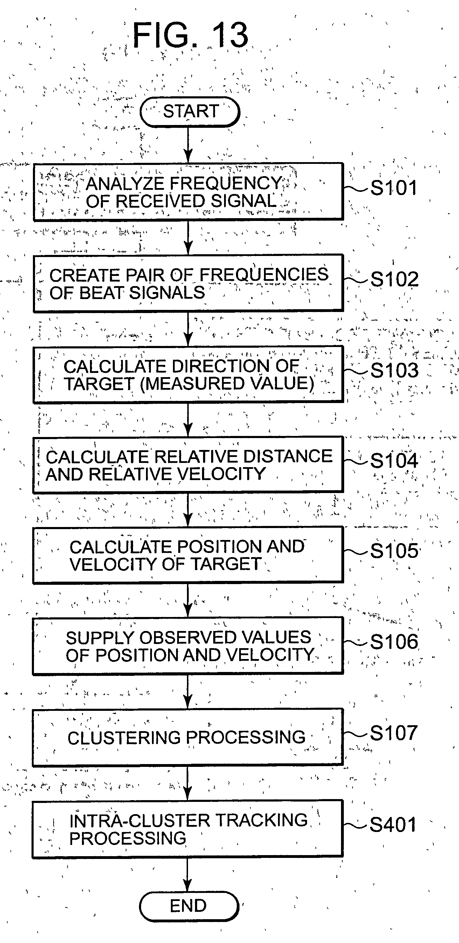

In a situation as in Fig. 12, the radar device 2 radiates beams based on reference signals generated by the VCO 11 as in Embodiment 1, and A/D converts the reflected waves thereof, to output the received signals to the signal processor 17. Next, the signal processor 17 performs signal processing on the received signals. Fig. 13 is a flowchart illustrating the signal processing of the signal processor 17. In the figure, the processing steps with the same symbols as in Fig. 5 are similar to those in Embodiment 1, so that the description therefor will be omitted. Accordingly, step S101 through step S109 are the same as in Embodiment 1. Consequently, the position/velocity computing unit 26 calculates, observed values of the targets, and the target tracking fliter 27 performs tracking processing for each target. The resulting smoothed values are stored into the tracking information storage 28. Then the clustering unit 29 performs clustering. Here, it is assumed that the vehicles 104 and 105, for example, are close enough to each other, and that a cluster has been formed based on the vehicles.

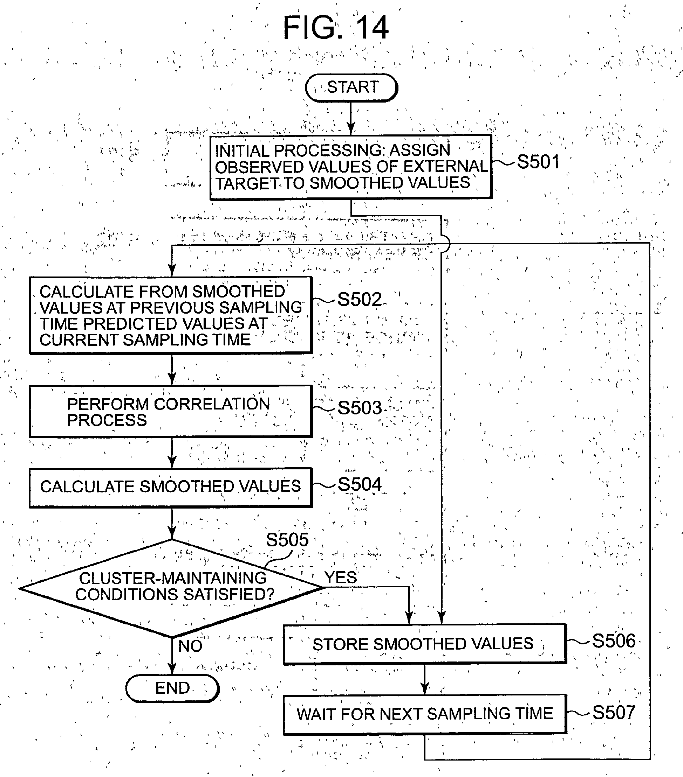

In step S401, if a cluster is present, tracking processing is performed while regarding the cluster as a single target. Fig. 14 is a flowchart of the tracking processing performed by the intra-cluster target tracking filter 30. In step S501 in the figure, the cluster parameter estimating unit 31 estimates parameters of the cluster from the positions and the velocities of the external targets, calculated by the position/velocity computing unit 26. The parameters of the cluster, obtained here, are set to initial values for the smoothed values of the cluster parameters. The cluster parameter estimating unit 31 uses as cluster parameters the weighted center of the cluster, and the distance between targets within the cluster, and calculates the values as follows.

Here, as an example, the cluster is assumed to include N targets. It is assumed that the coordinates of a q-th (q = 1, 2,..., N) target (referred to as TGTq) are $(x_q, y_q)$, and the velocity thereof is $v_q$. In this case, the coordinates $(g_x, g_y)$ of the weighted center of the cluster, and the velocity $g_y$ of the weighted center are given by the equation (23) and the equation (24).

$$g = \frac{1}{N}\left(\sum_{q=1}^{N} x_q, \sum_{q=1}^{N} y_q\right) \tag{23}$$

$$g_v = \frac{1}{N}\sum_{q=1}^{N} v_q \tag{24}$$

The distance between targets is not to be given by a scalar, but to be given by a vector composed of an x coordinate component and a y coordinate component. Then, given that the x coordinate component is $Wx_{ij}$, and the y coordinate component is $Wy_{ij}$, the distance between a target $TGT_1$ and a target $TGT_j$ is given by the equation (25) and the equation (26).

$$\mathbf{Wx_{ij}} = \mathbf{x_i} - \mathbf{x_j} \qquad\qquad (25)$$

$$\mathbf{Wy_{ij}} = \mathbf{y_i} - \mathbf{y_j} \qquad\qquad (26)$$

In addition to the above-described method of defining the distance, the distance value can be defined as a scalar distance from the weighted center g.

Next, step S506 ensues, and the cluster parameter estimating unit 31 stores into the cluster information storage 32 the cluster parameters. Next, in step S507, arrival of a next sampling time is awaited. On the arrival of the next sampling time, the processing starting from step S502 ensues as steady processing.

(Steady processing)

In step S502, the intra-cluster target, tracking filter 30 calculates predicted values of the cluster parameters. Given that an elapsed time from the previous sampling time is T, the smoothed value of the x component coordinate of the weighted center is $gx_s(k)$, the smoothed value of the y component coordinate is $gy_s(k)$, and the smoothed value of the velocity is $gv_s(k)$ (k indicates that the processing is for the k-th sampling), the predicted value of the x component coordinate, $gx_p(k)$, the predicted value of the y component coordinate, $gy_p(k)$, and the predicted value of the velocity, $gv_p(k)$, of the weighted center, are given as follows.

$$gx_p(k) = gx_s(k-1) \qquad\qquad (27)$$

$$gy_p(k) = gy_s(k-1) + gv_s(k-1)\cdot T \qquad\qquad (28)$$

$$gv_p(k) = gv_s(k-1) \qquad\qquad (29)$$

Moreover, given that the smoothed value of the x coordinate component distance is $Wsx_{ij}(k)$, the smoothed value of the y coordinate component distance is $Wsy_{ij}(k)$, and the smoothed value of the rate at which the distance varies with time is $rv_s(k)$, the predicted value of the x coordinate component distance, $Wpx_{ij}(k)$, and the predicted value of the y coordinate component distance, $Wpy_{ij}(k)$, between the target $TGT_1$ and the target $TGT_j$, are given as follows.

$$Wpx_{ij}(k) = Wsx_{ij}(k - 1) \qquad\qquad (30)$$

$$Wpy_{ij}(k) = Wsy_{ij}(k - 1) + rv_s(k - 1)\cdot T \qquad\qquad (31)$$

Furthermore, the predicted value of the distance-variation rate over time, $rv_p(k)$, is given as follows.

$$rv_p(k) = gv_s(k - 1) \qquad\qquad (32)$$

Next, in step S503, the intra-cluster target tracking filter 30 performs the correlation process to obtain observed values. In the correlation process, when the gates for some targets among a plurality of targets overlap, the gates are set so that they gates are divided at the weighted center. Specifically, in the gate setting method in Fig. 9 described, in Embodiment 1, given that the target 107 is $TGT_l$, the target 108 is $TGT_j$, and the midpoint 113 is not regarded as the midpoint but as, the weighted center, the configured rectangle 114 is deemed as the gate for, the target $TGT_i$, and the rectangle 115 is deemed as the gate for the target $TGT_j$. The mathematical expressions therefor have been described in the equation (18) through the equation (22), so,that they are omitted here.

Next, in step S504, the intra-cluster target tracking filter 30 calculates smoothed values of the cluster parameters. Given that the observed value of the x component coordinate of the q-th target is xoq, the observed value of the y component coordinate is $y_{oq}$, the observed value of the velocity is vo; the gain of the x component is $\alpha_x$, and the gain of the y component is $\alpha_y$, the smoothed value of the x component coordinate, $gx_s(k)$, the smoothed value of the y, component coordinate, $gy_s(k)$, and the smoothed value of the velocity, $gv_s(k)$, of the weighted center, are given by the equation (33), the equation (34), and the equation (35).

$$ gx_s(k) = gx_p(k) + \alpha_x \left[ \frac{1}{N} \sum_{q=1}^{N} x_{oq} - gx_p \right] \tag{33} $$

$$ gy_s(k) = gy_p(k) + \alpha_y \left[ \frac{1}{N} \sum_{q=1}^{N} y_{oq} - gy_p \right] \tag{34} $$

$$ gv_s(k) = \frac{1}{N} \sum_{q=1}^{N} v_o(k) \tag{35} $$

In addition, in setting the gains, considering that the observation accuracy of the bearings of intra-cluster, targets is likely to be low, the gains are set lower than usual, so that the observation accuracy is prevented from being affected. Moreover, the smaller the predicted distance between targets in a cluster, 16 other words, the more closely the predicted valued of the target positions are distributed, the lower the observation accuracy of the bearings, so that the gains can be weighted to be small. For example, given that G is a constant, the gain is given according to the equation (36).

$$ \alpha_{xq} = \frac{\sum_{i=1}^{N} Wpx_{qi}}{N} G \tag{36} $$

Furthermore, because the larger, the variance of the predicted values, the lower the observation accuracy of the bearing angle, the gains can be similarly weighted as the equation (36) so as to be small. Moreover, the gains can be calculated by weighting in consideration of both the variance of the predicted values and the distance between the predicted values.

Given that the smoothed value of the x coordinate component distance is $Wpx_{ij}(k)$, the smoothed value of the y coordinate component distance is $Wpy_{ij}(k)$, the smoothed value of the distance-variation rate over time is $rv_s(k)$, the gain of the x component is Ax, and the gain of the y component is Ay, the smoothed value of the x coordinate component distance, $Wsx_{ij}(k)$, and the predicted value of the y coordinate component distance, $Wpy_{ij}(k)$, between the target $TGT_i$ and the target $TGT_J$, are given as follows.

$$ Wsx_{ij}(k) = Wpx_{ij}(k) + A_x \left[ \sum_{q=1}^{N} x_{oq} - Wpx_{ij}(k) \right] \tag{37} $$

$$Wsy_{ij}(k) = Wpy_{ij}(k) + A_y \left[ \sum_{q=1}^{N} y_{oq} - Wpy_{ij}(k) \right] \quad (38)$$

Furthermore, the predicted value of the distance-variation rate over time, $rv_p(k)$, is given as follows.

$$rv_p(k) = v_{oi}(k) - v_{oj}(k) \quad (39)$$

Next, in step S505, the cluster breaking-up unit, 33 judges, whether the cluster-maintaining conditions are satisfied at the point of time. The judgment is made by checking whether the distances between the targets are within a threshold. Meanwhile, whether all of the predicted values, the observed values, and the smoothed values, of the cluster parameters, are within the observation area can be judged. If the cluster-maintaining conditions are satisfied, step S506 ensues, (step S505:Yes). The following processing will be described later. If the cluster-maintaining, conditions are not satisfied, the tracking processing cannot be continued any more, so that the processing is terminated (step S505: No).

In step S506, the intra-cluster target tracking filter 30, stores the cluster parameter smoothed values into the cluster information storage 32. The subsequent processing is the same as described in the explanation of the initial processing, so that the explanation thereof will be omitted.

In addition, although, in the above-described tracking processing, the predicted values and the smoothed values have been calculated using an $\alpha$ filter for the x component, and an $\alpha$-$\beta$ filter for the y component, a Karman filter can be used for the calculations.

Obviously from the above, according to a radar device in Embodiment 2 of the present invention, a cluster is formed from a plurality of targets that is close to each other and driving in parallel at a constant velocity, and tracking processing is performed while regarding the cluster as a single target, whereby effects of errors in observed values of the targets in the cluster can be eliminated, so that, highly accurate observations can be performed.

Moreover, although the radar device according to Embodiment 2 of the present invention includes, as in Embodiment 1, the target tracking filter 27 for performing tracking processing for each target, the radar device according to Embodiment 2 of the present invention has a feature in that the intra cluster target tracking filter 30 tracks a cluster regarded as a single target, so that the feature of the invention is realized regardless of whether or not the target bracking filter 27 is present. Therefore, the targets tracking filter 27 is not a mandatory component:

INDUSTRIAL APPLICABILITY

As described above, a radar device relevant to the present invention is useful in measuring the directions of a plurality of targets that are close to each other, for example, for an in-vehicle radar.

**Claims**

1. A radar device including:

    an antenna for receiving as reception waves radio waves coming from a plurality of external targets;
    a signal detector for converting the reception waves received by the antenna into received signals to extract quantities characterizing the received signals; and
    a position/velocity computing, unit for calculating, from the received-signal characterizing quantities extracted by the signal detector, observed position values and observed velocity values of each of the external targets;
    the radar device **characterized by**
    a target tracking filter for performing a correlation process, based on first gates, on the observed position values and the observed velocity values calculated by the position/velocity computing unit, to calculate, from the observed position values and the observed velocity values that satisfy the first gates, smoothed values of the positions and velocities of each of the external targets;
    a clustering unit for; when external targets are close to each other, creating a cluster to include the external targets, based on the smoothed, values of the positions of each of the external targets; and
    an intra-cluster target tracking filter for performing a correlation process, based on second gates, on the observed position values and the observed velocity values of the external targets belonging to the cluster formed by the clustering unit, to calculate, from the observed position values and the observed velocity values that satisfy the second gates, smoothed values of the positions and velocities of each of the external targets.

2. A radar device including:

an antenna for receiving as reception waves radio waves coming from a plurality of external targets;
a signal detector for converting the reception waves received by the antenna into received signals to extract quantities, characterizing the received signals; and
a position/velocity computing unit for calculating, from the received-signal characterizing quantities extracted by the signal detector, observed position values and observed velocity values of each of the external targets;
the radar device **characterized by**
a target tracking filter for performing a correlation process, based on first gates, on the observed position values and the observed velocity values calculated by the position/velocity computing unit, to calculate, from the observed position values and the observed velocity values that satisfy the first gates, smoothed values of the positions and velocities of each of the external targets;
a clustering unit for, when external targets are close to each other, creating a cluster to include the external targets, based on the smoothed values of the positions of each of the external targets; and
an infra-cluster target tracking filter for, while regarding the cluster formed by the clustering unit, as a single external target, calculating, from the observed position values and the observed velocity values calculated by the position/velocity computing unit, smoothed values of cluster parameters expressing features of the cluster.

3. A radar device according to claim 2, wherein, when two external targets are present, the intra-cluster target tracking filter calculates, as the smoothed values of the cluster parameters, smoothed values of the midpoint of the external target positions, of the velocity of the midpoint, of the distance between the external targets, and of the rate at which the distance varies over time.

4. A radar device according to claim 2, wherein, when three, or more external targets are present, the intra-cluster target tracking filter-calculates, as the smoothed values of the cluster, parameters, smoothed values of the weighted center of a polygon whose vertices are on the positions of the external targets, of the velocity of the weighted center, of the distances between the external, targets, and of the rates at which the distances vary over time.

5. A radar device according to claim 1 or 2, wherein, when the first gates for a plurality of external targets belonging to the cluster overlap, the intra-cluster target tracking filter performs the correlation process based on second gates created by dividing the first gates at the weighted center of the external targets.

6. A radar device according to claim 1 or 2, wherein, when the first gates for a plurality of external targets belonging to the, cluster overlap, a buffer area is provided in the vicinity of the weighted center of the external, targets, and the intra-cluster target tracking filter performs the correlation process based on second gates created by dividing the first gates so as to contact the outer border of the buffer area.

7. A radar device according to claim 1 or 2, wherein
the target tracking filter further calculates predicted values, of the distances between the external targets; and
the clustering unit calculates the variance of the predicted values of the distances, determines a predetermined threshold based on the variance and forms the cluster when the distances between the external targets are not larger than the threshold.

8. A radar device according to claim 1 or 2; wherein the intra-cluster target tracking filter determines, based on the distance from the weighted center of a polygon whose vertices are on the positions of the external targets, gains for determining contributions of the observed values in calculating the smoothed values.

9. A radar device according to claim 1 or 2, wherein
the antenna radiates toward the external targets a reference signal having an up phase for continuously increasing the frequency and a down phase for continuously decreasing the frequency as transmission waves having beam patterns in a plurality of directions;
the signal detector generates, in the up phase and in the down phase, beat signals from the received signals and the reference signal; and
the position/velocity computing unit calculates, from the beat signals in the up phase and the beat signal in the down phase, relative velocities and relative distances of the external targets, calculates directions of the external targets from differences in quantities characterizing the beat signals in adjacent beam patterns, and calculates, from the relative velocities, the relative distances, and the directions, the observed position values and the observed velocity values of the external targets.

10. A radar device according to claim 9, wherein the radar device is installed in an automobile.

# FIG. 1

# FIG. 2

# FIG. 3

_17_

SIGNAL PROCESSOR

21
FREQUENCY ANALYZER

22
FREQUENCY STORAGE

23
UP-PHASE/ DOWN-PHASE COUPLER

26
POSITION/VELOCITY COMPUTING UNIT

24
RELATIVE DISTANCE/ VELOCITY COMPUTING UNIT

27
TARGET TRACKING FILTER

25
BEARING COMPUTING UNIT

28
TRACKING INFORMATION STORAGE

29
CLUSTERING UNIT

30
INTRA-CLUSTER TARGET TRACKING FILTER

# FIG. 4

# FIG. 5

```
                    ┌─────────────┐
                    │    START    │
                    └─────────────┘
                           │
                           ▼
        ┌──────────────────────────────────┐
        │  ANALYZE FREQUENCY OF            │─ S101
        │  RECEIVED SIGNAL                 │
        └──────────────────────────────────┘
                           │
                           ▼
        ┌──────────────────────────────────┐
        │  CREATE PAIR OF FREQUENCIES      │─ S102
        │  OF BEAT SIGNALS                 │
        └──────────────────────────────────┘
                           │
                           ▼
        ┌──────────────────────────────────┐
        │  CALCULATE DIRECTION OF          │─ S103
        │  TARGET (MEASURED VALUE)         │
        └──────────────────────────────────┘
                           │
                           ▼
        ┌──────────────────────────────────┐
        │  CALCULATE RELATIVE DISTANCE     │─ S104
        │  AND RELATIVE VELOCITY           │
        └──────────────────────────────────┘
                           │
                           ▼
        ┌──────────────────────────────────┐
        │  CALCULATE POSITION AND          │─ S105
        │  VELOCITY OF TARGET              │
        └──────────────────────────────────┘
                           │
                           ▼
        ┌──────────────────────────────────┐
        │  SUPPLY OBSERVED VALUES          │─ S106
        │  OF POSITION AND VELOCITY        │
        └──────────────────────────────────┘
                           │
                           ▼
        ┌──────────────────────────────────┐
        │  CLUSTERING PROCESSING           │─ S107
        └──────────────────────────────────┘
                           │
                           ▼
        ┌──────────────────────────────────┐
        │  INTRA-CLUSTER TRACKING          │─ S108
        │  PROCESSING                      │
        └──────────────────────────────────┘
                           │
                           ▼
                    ┌─────────────┐
                    │     END     │
                    └─────────────┘
```

# FIG. 6

START

INITIAL PROCESSING: ASSIGN
OBSERVED VALUES OF EXTERNAL
TARGET TO SMOOTHED VALUES — S201

CALCULATE FROM SMOOTHED
VALUES AT PREVIOUS SAMPLING
TIME PREDICTED VALUES AT
CURRENT SAMPLING TIME — S202

PERFORM CORRELATION
PROCESS — S203

CALCULATE SMOOTHED VALUES — S204

PREDICTED
VALUES, OBSERVED
VALUES, SMOOTHED VALUES ARE
WITHIN OBSERVATION
AREA? — S205

YES

NO

END

STORE SMOOTHED VALUES — S206

WAIT FOR NEXT SAMPLING TIME — S207

# FIG. 7

START

GENERATE COMBINATIONS CONSISTING OF TWO TARGETS — S301

N=1 — S302

CALCULATE DISTANCE BETWEEN TARGETS IN N-TH COMBINATION — S303

S304
DISTANCE BETWEEN TARGETS THRESHOLD ? — NO

YES

S305
TARGETS IN N-TH COMBINATION BELONG TO CLUSTER? — NO

S309
FORM NEW CLUSTER

YES

S306
BOTH TARGETS BELONG TO DIFFERENT CLUSTERS? — NO

S308
AFFILIATE TARGET NOT BELONGING TO CLUSTER WITH OTHER TARGET'S CLUSTER

YES

S307
INTEGRATE TWO CLUSTERS

N=N+1 — S310

S311
N ≦ TOTAL NUMBER OF COMBINATIONS? — NO

YES

END

## FIG. 8

## FIG. 9

FIG. 10

# FIG. 11

17

SIGNAL PROCESSOR

21

FREQUENCY ANALYZER

22

FREQUENCY STORAGE

23

UP-PHASE/ DOWN-PHASE COUPLER

26

POSITION/VELOCITY COMPUTING UNIT

24

RELATIVE DISTANCE/ VELOCITY COMPUTING UNIT

27

TARGET TRACKING FILTER

25

BEARING COMPUTING UNIT

28

TRACKING INFORMATION STORAGE

30

INTRA-CLUSTER TARGET TRACKING FILTER

31

CLUSTER PARAMETER ESTIMATING UNIT

29

CLUSTERING UNIT

32

CLUSTER INFORMATION STORAGE

33

CLUSTER BREAKING-UP UNIT

# FIG. 12

# FIG. 13

START

↓

ANALYZE FREQUENCY OF RECEIVED SIGNAL　～S101

↓

CREATE PAIR OF FREQUENCIES OF BEAT SIGNALS　～S102

↓

CALCULATE DIRECTION OF TARGET (MEASURED VALUE)　～S103

↓

CALCULATE RELATIVE DISTANCE AND RELATIVE VELOCITY　～S104

↓

CALCULATE POSITION AND VELOCITY OF TARGET　～S105

↓

SUPPLY OBSERVED VALUES OF POSITION AND VELOCITY　～S106

↓

CLUSTERING PROCESSING　～S107

↓

INTRA-CLUSTER TRACKING PROCESSING　～S401

↓

END

# FIG. 14

START

INITIAL PROCESSING: ASSIGN
OBSERVED VALUES OF EXTERNAL ~S501
TARGET TO SMOOTHED VALUES

CALCULATE FROM SMOOTHED
VALUES AT PREVIOUS SAMPLING ~S502
TIME PREDICTED VALUES AT
CURRENT SAMPLING TIME

PERFORM CORRELATION ~S503
PROCESS

CALCULATE SMOOTHED VALUES ~S504

CLUSTER-MAINTAINING          YES
CONDITIONS SATISFIED?                    S505

NO

END

STORE SMOOTHED VALUES ~S506

WAIT FOR NEXT SAMPLING TIME ~S507

29

## INTERNATIONAL SEARCH REPORT

| International application No |
| --- |
| PCT/JP03/11647 |

| A | CLASSIFICATION OF SUBJECT MATTER |
| --- | --- |
| | Int.Cl⁷ G01S13/66, G01S13/34, G01S13/44, G01S13/93 |

According to International Patent Classification (IPC) or to both national classification and IPC

| B | FIELDS SEARCHED |
| --- | --- |

Minimum documentation searched (classification system followed by classification symbols)
Int.Cl⁷ G01S13/66, G01S13/34, G01S13/44, G01S13/93

Documentation searched other than minimum documentation to the extent that such documents are included in the fields searched
Jitsuyo Shinan Koho        1922–1996    Toroku Jitsuyo Shinan Koho    1994–2003
Kokai Jitsuyo Shinan Koho   1971–2003    Jitsuyo Shinan Toroku Koho    1996–2003

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X<br>Y | JP 2003-248057 A (Japan Radio Co., Ltd.),<br>05 September, 2003 (05.09.03),<br>Full text; all drawings<br>(Family: none) | 2-4<br>9,10 |
| Y | WO 98/32030 A1 (AUTOMOTIVE SYSTEMS LABORATORY, INC.),<br>23 July, 1998 (23.07.98),<br>Full text; all drawings<br>& JP 2002-511922 A<br>Full text; all drawings<br>& US 6085151 A         & EP 954758 A1<br>& KR 2000069850 A | 9,10 |

| ☒ Further documents are listed in the continuation of Box C | ☐ See patent family annex. |
| --- | --- |

| * Special categories of cited documents<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search<br>09 October, 2003 (09.10.03) | Date of mailing of the international search report<br>28 October, 2003 (28.10.03) |
| --- | --- |
| Name and mailing address of the ISA/<br>Japanese Patent Office | Authorized officer |
| Facsimile No | Telephone No |

Form PCT/ISA/210 (second sheet) (July 1998)

**INTERNATIONAL SEARCH REPORT**

| International application No. |
|---|
| PCT/JP03/11647 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-271430 A (Toyota Central Research And Development Laboratories, Inc.), 08 October, 1999 (08.10.99), Full text; all drawings (Family: none) | 9,10 |
| A | JP 2003-149328 A (Mitsubishi Electric Corp.), 21 May, 2003 (21.05.03), Full text; all drawings (Family: none) | 1-10 |
| A | JP 2002-168949 A (Mitsubishi Electric Corp.), 14 June, 2002 (14.06.02), Full text; all drawings (Family: none) | 1-10 |
| A | JP 2001-153947 A (Mitsubishi Electric Corp.), 08 June, 2001 (08.06.01), Full text; all drawings (Family: none) | 1-10 |
| A | JP 2003-130948 A (Mitsubishi Electric Corp.), 08 May, 2003 (08.05.03), Full text; all drawings (Family: none) | 1-10 |
| A | JP 2000-230977 A (Mitsubishi Electric Corp.), 22 August, 2000 (22.08.00), Full text; all drawings (Family: none) | 1-10 |
| A | JP 2002-133421 A (Fujitsu Ltd.), 10 May, 2002 (10.05.02), Full text; all drawings (Family: none) | 1-10 |

Form PCT/ISA/210 (continuation of second sheet) (July 1998)